# EUROPÄISCHE PATENTSCHRIFT

(11) **EP 4 010 967 B1**
(45) Veröffentlichungstag und Bekanntmachung des Hinweises auf die Patenterteilung: **13.05.2026**
(21) Anmeldenummer: 20745190.7
(22) Anmeldetag: 23.07.2020
(51) Int. Cl.: H02K 15/35, H02K 15/0643

(54) **FERTIGUNGSSYSTEM UND VERFAHREN ZUM FERTIGEN EINES STATORS MIT STABLEITERN**
MANUFACTURING SYSTEM AND METHOD FOR MANUFACTURING A STATOR WITH BAR CONDUCTORS
SYSTÈME DE FABRICATION ET PROCÉDÉ DE FABRICATION DE STATOR À CONDUCTEURS À BARRES

(30) Priorität: 07.08.2019 DE 102019211859
(43) Veröffentlichungstag der Anmeldung: 15.06.2022
(73) Patentinhaber: FELSOMAT GmbH & Co. KG, 75203 Königsbach-Stein (DE)
(72) Erfinder: PESCHINA, Jürgen, 75438 Knittlingen (DE); FROMMER, Stefan, 75433 Maulbronn (DE)
(74) Vertreter: Kohler Schmid Möbus Patentanwälte
(86) Internationale Anmeldenummer: PCT/EP2020/070840
(87) Internationale Veröffentlichungsnummer: WO 2021/023519

(56) Entgegenhaltungen:
- WO-A1-2012/007972
- WO-A1-2018/065318
- WO-A1-2019/040958
- WO-A1-2019/040960
- DE-T2- 68 919 655
- GB-A- 2 290 040

## Beschreibung

Die Erfindung betrifft ein Fertigungssystem zum Fertigen eines Stators für eine elektrische Maschine, insbesondere einen Elektromotor, wobei der Stator einen Grundkörper und eine Vielzahl von gebogenen oder geraden Stableitern aufweist. Die Erfindung betrifft ferner ein Verfahren zum Fertigen eines Stators für eine elektrischen Maschine, insbesondere einen Elektromotor, wobei der Stator einen Grundkörper und eine Vielzahl von geraden oder gebogenen Stableitern aufweist.

Elektrische Maschinen, z.B. Elektromotoren, weisen verbreitet einen Stator mit einer sogenannten Spulenwicklung auf. Traditionell wird die Spulenwicklung durch Aufwickeln eines Drahtes hergestellt. Solche Wickelverfahren sind jedoch technisch aufwendig und unterliegen technischen Einschränkungen. Zudem ist der Füllungsgrad (Flächenanteil des Drahtes in einem überwickelten Querschnitt) bei gewickelten Spulen begrenzt.

Spulen von Statoren elektrischer Maschinen können alternativ auch durch miteinander verbundene Stableiter, die in einen Grundkörper des Stators eingesteckt sind, ausgebildet sein. Insbesondere im Bereich elektromotorisch antreibbarer (bzw. angetriebener) Kraftfahrzeuge werden zunehmend Elektromotoren mit Statoren mit Stableitern eingesetzt. Um zwei Stableiter miteinander zu verbinden, werden deren freie Enden typischerweise miteinander verschweißt. Zuvor werden die Stableiter üblicherweise derart gebogen, dass die freien Enden zweier zu verschweißender Stableiter einander angenähert werden. Ferner werden die freien Enden der Stableiter vor dem Verschweißen meist in radialer Richtung aufgespreitzt, so dass nicht miteinander zu verschweißende Stableiter einander nicht berühren. Die Handhabung und Fixierung des Stators mit den Stableitern ist nach dem Stand der Technik bisher sehr aufwendig.

Aus der WO 2019/040958 A1 ist ein Fertigungssystem mit einer Haltevorrichtung zum Fertigen eines Stators einer elektrischen Maschine mit Stableitern bekannt.

### Aufgabe der Erfindung

Der Erfindung liegt die Aufgabe zugrunde, ein Fertigungssystem und ein Fertigungsverfahren für eine beschleunigte und kostengünstige Fertigung von Statoren mit Stableitern anzugeben.

### Kurze Beschreibung der Erfindung

Diese Aufgabe wird gelöst durch ein Fertigungssystem zum Fertigen eines Stators für eine elektrische Maschine nach Anspruch 2.

Die Haltevorrichtung dient erfindungsgemäß zur Handhabung des Stators und seiner Fixierung an den einzelnen Maschinen des Fertigungssystems. Während der Bearbeitung eines Stators mit den Maschinen des Fertigungssystems wird der Stator grundsätzlich nicht aus der Haltevorrichtung gelöst, sondern bleibt in dieser gehalten. Das Fertigungssystem erlaubt die Fertigung des Stators, ohne an den einzelnen Maschinen jeweils spezielle Aufnahmen für den zu fertigenden Typ von Stator vorzusehen. Die Haltevorrichtung bildet somit ein Zwischenelement zur Verbindung des Stators mit den einzelnen Maschinen. Aufnahme- bzw. Halteeinrichtungen an den Maschinen können somit einfacher und kostengünstiger ausgeführt werden, da sie nur auf die Haltevorrichtung abgestimmt werden müssen. Durch die Haltevorrichtung kann auch das Befestigen des Stators an den einzelnen Maschinen beschleunigt werden. Insbesondere ist es nicht erforderlich, an jeder der Maschinen den Grundkörper und die Stableiter aufwendig zu fixieren. Die Haltevorrichtung kann zum Festlegen an den Maschinen einen Satz von Kopplungselementen aufweisen. Die einzelnen Maschinen weisen typischerweise jeweils einen Satz von korrespondierenden Gegenkopplungselementen auf. Bei unterschiedlichen Typen von Statoren, die insbesondere unterschiedliche Abmessungen (z.B. Länge und Durchmesser) besitzen, bleiben die Gegenkopplungselemente an den Maschinen des Fertigungssystems identisch; es werden lediglich unterschiedliche Haltevorrichtungen (welche speziell auf den jeweiligen Typ von Stator angepasst sind, z.B. hinsichtlich Länge und Durchmesser) vorgesehen. Die Biege-, Spreiz- und Schweißmaschine sind daher ohne Änderung zur Fertigung unterschiedlicher Typen von Statoren verwendbar. Die Haltevorrichtung kann auch außerhalb des Fertigungssystems universell zur Handhabung des Stators eingesetzt werden.

Die Haltevorrichtung weist zumindest einen ersten Satz von Fingern auf. Die Finger dienen zum Eingreifen zwischen die Stableiter an einer ersten Stirnseite des Grundkörpers. Wenn die Finger zwischen die Stableiter eingreifen, übergreifen sie typischerweise den Grundkörper zumindest bereichsweise. Durch die Finger des ersten Satzes kann daher der Grundkörper zumindest in einer ersten Richtung fixiert werden. Durch das Eingreifen der Finger zwischen die Stableiter können die Stableiter fixiert und ausgerichtet werden. Typischerweise liegen die Finger an den Stableitern an, wenn sie zwischen diese eingreifen.

Die Finger der Haltevorrichtung sind grundsätzlich in radialer Richtung zwischen einer geöffneten (nach radial außen ausgerückten) und einer geschlossenen (nach radial innen eingerückten) Stellung verbringbar. In der geöffneten Stellung der Finger kann der Stator in die Haltevorrichtung eingesetzt und aus der Haltevorrichtung entnommen werden. Die Finger weisen typischerweise wenigstens eine Schulter, bevorzugt zwei Schultern, zum radialen Verspannen der Stableiter auf. Dadurch können die Stableiter besonders präzise ausgerichtet werden.

Die Biegemaschine dient zum Biegen der freien Enden der Stableiter, so dass miteinander zu verschweißende freie Enden wenigstens zweier Stableiter einander angenähert werden. Die Spreizmaschine dient zum Aufspreizen der freien Enden der Stableiter in radialer Richtung. Durch das Aufspreizen kann vermieden werden, dass nicht miteinander zu verschweißende bzw. verschweißte Enden von Stableitern einander berühren. Die Schweißmaschine dient zum Verschweißen der freien Enden von je wenigstens zwei Stableitern. Typischerweise ist vorgesehen, dass jeweils zwischen zwei und sechs, in Sonderfällen auch mehr, Stableiter miteinander verschweißt werden. Die Schweißmaschine kann eine Laserschweißeinrichtung aufweisen. Das Fertigungssystem ist typischerweise zur Anwendung der vorgenannten Maschinen auf einen zu fertigenden Stator in dieser Reihenfolge eingerichtet. Alternativ kann das Fertigungssystem insbesondere zur Anwendung der Spreizmaschine vor der Biegemaschine eingerichtet sein.

Die Stableiter sind in dem Grundkörper des Stators grundsätzlich in mehreren ringförmigen Lagen bzw. konzentrischen Ringen angeordnet. Der Grundkörper ist typischerweise als ein Blechpaket ausgebildet. Die Stableiter können zumindest teilweise an beiden Enden (beidseits des Grundkörpers) zu verschweißen sein. In diesem Fall sind die Stableiter meist (ursprünglich) gerade ausgebildet. Gerade Stableiter können auch zur elektrischen Kontaktierung des Stators dienen. Alternativ können die Stableiter zumindest teilweise in der Art einer Haarnadel (sog. Hairpin) U-förmig gebogen sein. Auf einer Seite des Grundkörpers ist somit durch den U-förmig gebogenen Abschnitt eine Verbindung zwischen sich durch den Grundkörper hindurch erstreckenden, meist geraden, Längsabschnitten der Stableiter eingerichtet.

Das erfindungsgemäße Fertigungssystem eignet sich insbesondere zur Durchführung eines unten beschriebenen, erfindungsgemäßen Fertigungsverfahrens. Vorzugsweise wird das erfindungsgemäße Fertigungssystem zur Durchführung eines unten beschriebenen, erfindungsgemäßen Fertigungsverfahrens verwendet.

Erfindungsgemäß weist das Fertigungssystem weiterhin eine Be- und Entladestation für die Haltevorrichtung auf. Die Be- und Entladestation kann die Verkettung des Fertigungssystems mit weiteren Einrichtungen erleichtern. Die Be- und Entladestation kann zum Einsetzen der vormontierten Komponenten (Grundkörper und Stableiter) des Stators in die Haltevorrichtung und zum Entnehmen des bearbeiteten Stators aus der Haltevorrichtung dienen. Alternativ kann die Be- und Entladestation zum Ein- und Ausschleusen von Haltevorrichtungen (mit Statoren) dienen. Die Haltevorrichtung ist typischerweise auch an der Be- und Entladestation festlegbar.

Besonders bevorzugt ist eine Ausführungsform des Fertigungssystems, bei der die Haltevorrichtung eine einheitliche Schnittstelle zum Festlegen der Haltevorrichtung an der Biegemaschine, der Spreizmaschine und der Schweißmaschine aufweist. Die Haltevorrichtung kann dadurch besonders einfach aufgebaut sein; insbesondere sind keine individuell auf die einzelnen Maschinen abgestimmten Spezialschnittstellen erforderlich. Die Biegemaschine, die Spreizmaschine und die Schweißmaschine weisen jeweils eine zu der Schnittstelle der Haltevorrichtung komplementäre Aufnahmeeinrichtung auf. Ggf. kann auch die Be- und Entladestation eine zu der Schnittstelle der Haltevorrichtung komplementäre Aufnahmeeinrichtung aufweisen, so dass die Haltevorrichtung an der Be- und Entladestation über die einheitliche Schnittstelle festgelegt werden kann.

Besonders bevorzugt weist das Fertigungssystem weiterhin ein Handhabungsgerät auf zum Verbringen der Haltevorrichtung zu der Biegemaschine, der Spreizmaschine und der Schweißmaschine, insbesondere wobei die Haltevorrichtung einen Kupplungsabschnitt, vorzugsweise einen Schnellwechselkupplungsabschnitt, für das Handhabungsgerät aufweist. Ggf. dient das Handhabungsgerät auch zum Verbringen der Haltevorrichtung zu der Be- und Entladestation. Durch das Handhabungsgerät kann die Fertigung des Stators innerhalb des Fertigungssystems weiter automatisiert werden. Das Handhabungsgerät kann einen Drehtisch aufweisen. Auf dem Drehtisch ist vorzugsweise ein Greifer für die Haltevorrichtung angeordnet.

Bei einer besonders vorteilhaften Ausführungsform des Fertigungssystems ist vorgesehen, dass die Haltevorrichtung eine erste Komponente eines zentrierenden Spannsystems, insbesondere eines Nullpunktspannsystems, aufweist, und dass die Biegemaschine, die Spreizmaschine und die Schweißmaschine jeweils eine komplementäre Komponente des zentrierenden Spannsystems aufweisen. Ggf. kann auch die Be- und Entladestation eine komplementäre Komponente des zentrierenden Spannsystems aufweisen. Ein zentrierendes Spannsystem erlaubt eine besonders präzise Fixierung der Haltevorrichtung an den Maschinen.

Eine bevorzugte Ausführungsform des Fertigungssystems ist dadurch gekennzeichnet, dass die Haltevorrichtung ein Zentrierelement für eine radiale Anlage der Finger des ersten Satzes aufweist. Das Zentrierelement kann die Genauigkeit der Positionierung des Stators verbessern; das Zentrierelement kann hierzu insbesondere bewirken, dass die Finger jeweils gleich weit nach radial innen eingefahren werden. Das Zentrierelement kann in der Art einer zentral in der Haltevorrichtung angeordneten Scheibe ausgebildet sein. Im geklemmten Zustand (bei geschlossener Haltevorrichtung, d.h. nach radial innen eingefahrenen Fingern) liegen auch die Stableiter einer radial innersten Lage, typischerweise unmittelbar, an dem Zentrierelement an. Das Zentrierelement erhöht dann in besonderem Maße auch die Genauigkeit der Ausrichtung der freien Enden der Stableiter. Die Finger des ersten Satzes können zur Anlage an dem Zentrierelement von radial außen in eine Umfangsnut des Zentrierelements eingreifen.

Vorteilhaft ist auch eine Ausführungsform des Fertigungssystem, bei der vorgesehen ist, dass die Finger jeweils ein elastisches Element zwischen einem Eingriffsabschnitt und einem Antriebsabschnitt des jeweiligen Fingers aufweisen. Mit anderen Worten sind der Eingriffsabschnitt und der Antriebsabschnitt der Finger jeweils über ein elastisches Element miteinander verbunden. Finger mit einem elastischen Element eignen sich in besonderer Weise zum Verspannen der Stableiter. Insbesondere kann der Antriebsabschnitt der Finger weggesteuert betätigbar sein. Die Eingriffsabschnitte der Finger werden dann durch die elastischen Elemente jeweils kinematisch von dem Antriebsabschnitt entkoppelt. Das elastische Element ermöglicht es insbesondere, den Eingriffsabschnitt unter zunehmender Kraft zu dem Antriebsabschnitt hin zu verschieben. Das elastische Element kann als eine Feder, insbesondere eine zylindrische Schraubenfeder, ausgebildet sein.

Das Fertigungssystem ist dadurch gekennzeichnet, dass die Haltevorrichtung eine erste drehbare Nutenscheibe zum Verschieben der Finger des ersten Satzes aufweist. Über die erste Nutenscheibe kann ein gemeinsamer Antrieb aller Finger des ersten Satzes eingerichtet sein. Die Finger greifen typischerweise mit Zapfen in Nuten der ersten Nutenscheibe ein. Die erste Nutenscheibe ist über einen Steuerschieber antreibbar. Der Steuerschieber weist ein Sicherungsmittel auf, das in einem unbetätigten Zustand ein Verschieben des Steuerschiebers unterbindet. Ein Betätigungselement für das Sicherungsmittel ist an einer Be- und Entladestation vorgesehen. Dadurch kann das Sicherungsmittel entsperrt werden, wenn die Haltevorrichtung, insbesondere über eine einheitliche Schnittstelle, mit der Be- und Entladestation verbunden ist.

Besonders bevorzugt ist eine Ausführungsform des Fertigungssystems, bei der die Haltevorrichtung einen zweiten Satz von Fingern zum Eingreifen zwischen die Stableiter an einer zweiten Stirnseite des Grundkörpers aufweist.

Wenn die Finger des zweiten Satzes zwischen die Stableiter eingreifen, übergreifen sie typischerweise den Grundkörper zumindest bereichsweise auf der - der ersten Stirnseite gegenüberliegenden - zweiten Stirnseite. Durch die Finger des zweiten Satzes kann daher der Grundkörper in einer zweiten Richtung fixiert werden. Die Finger des ersten und des zweiten Satzes können zusammen den Grundkörper, insbesondere entlang seiner Achsrichtung, vollständig fixieren. Die Finger des zweiten Satzes können wie die Finger des ersten Satzes ausgestaltet sein, insbesondere können auch die Finger des zweiten Satzes zwei federnd aneinander abgestützte Abschnitte aufweisen. Bei einer vorteilhaften Weiterbildung dieser Ausführungsform ist vorgesehen, dass die Haltevorrichtung eine zweite drehbare Nutenscheibe zum Verschieben der Finger des zweiten Satzes aufweist. Über die zweite Nutenscheibe kann ein gemeinsamer Antrieb aller Finger des zweiten Satzes eingerichtet sein. Die Finger greifen typischerweise mit Zapfen in Nuten der zweiten Nutenscheibe ein.

Bei einem Fertigungssystem, dessen Haltevorrichtung eine erste und eine zweite Nutenscheibe aufweist, ist vorzugsweise vorgesehen, dass die beiden Nutenscheiben über einen gemeinsamen Steuerschieber antreibbar sind. Dadurch wird das Öffnen und Schließen der Haltevorrichtung vereinfacht.

Es ist vorgesehen, dass der Steuerschieber ein Sicherungsmittel aufweist, das in einem unbetätigten Zustand ein Verschieben des Steuerschiebers unterbindet. Wenn das vorgenannte Fertigungssystem zusätzlich eine Be- und Entladestation aufweist, kann weiterhin vorgesehen sein dass an der Be- und Entladestation ein Betätigungselement für das Sicherungsmittel ausgebildet ist. Das Betätigungselement kann das Sicherungsmittel in einen betätigten Zustand überführen, wenn die Haltevorrichtung an der Be- und Entladestation festgelegt ist. Es kann insbesondere vorgesehen sein, dass das Betätigungselement, das Sicherungsmittel automatisch in die betätigte Stellung verbringt, wenn die Haltevorrichtung an der Be- und Entladestation fixiert wird. In dem betätigten Zustand des Sicherungsmittels kann der Steuerschieber verschoben werden. Wenn die Haltevorrichtung demgegenüber von der Be- und Entladestation gelöst ist, verhindert das Sicherungsmittel ein (ungewolltes) Öffnen der Haltevorrichtung.

Eine besonders bevorzugte Ausführungsform des Fertigungssystems ist dadurch gekennzeichnet, dass die Biegemaschine, die Spreizmaschine und die Schweißmaschine einen ersten Fertigungskreis für einen Umlauf der Haltevorrichtung bilden, dass das Fertigungssystem eine weitere Spreizmaschine, eine weitere Schweißmaschine und eine weitere Haltevorrichtung für einen Stator aufweist, und dass die Biegemaschine, die weitere Spreizmaschine und die weitere Schweißmaschine einen zweiten Fertigungskreis für einen Umlauf der weiteren Haltevorrichtung bilden . Mit anderen Worten läuft in dem ersten Fertigungskreis die Haltevorrichtung zwischen der Biegemaschine, der Spreizmaschine und der Schweißmaschine um, und in dem zweiten Fertigungskreis läuft die weitere Haltevorrichtung zwischen der Biegemaschine, der weiteren Spreizmaschine und der weiteren Schweißmaschine um. Die Biegemaschine ist mithin Teil beider Fertigungskreise. Die Biegemaschine ist im Vergleich zu den weiteren Maschinen meist sehr teuer. Durch die Verwendung einer einzigen Biegemaschine in zwei Fertigungskreisen können daher Kosten gespart werden. Die Taktzeit der Biegemaschine ist meist wesentlich kürzer als die Taktzeit der Schweißmaschinen. Durch die Verwendung von zwei Schweißmaschinen mit einer Biegemaschine kann daher die Biegemaschine besser ausgelastet werden. Soweit vorhanden, sind auch das Handhabungsgerät und die Be- und Entladestation Teil des ersten Fertigungskreises. Vorzugsweise weist das Fertigungssystem ein weiteres Handhabungsgerät und/oder eine weitere Be- und Entladestation auf, die Teil des zweiten Fertigungskreises sind. Die weitere Spreizmaschine, die weitere Schweißmaschine und die weitere Haltevorrichtung sowie ggf. das weitere Handhabungsgerät und/oder die weitere Be- und Entladestation sind typischerweise wie die (erste) Spreizmaschine, die (erste) Schweißmaschine, die (erste) Haltevorrichtung, das (erste) Handhabungsgerät bzw. die (erste) Be- und Entladestation ausgebildet. Das weitere Handhabungsgerät dient grundsätzlich zum Verbringen der weiteren Haltevorrichtung zu der Biegemaschine, der weiteren Spreizmaschine und der weiteren Schweißmaschine sowie ggf. der weiteren Be- und Entladestation. Die weitere Spreizmaschine, die weitere Schweißmaschine, die weitere Haltevorrichtung und ggf. die weitere Be- und Entladestation sind vorteilhaft (spiegel-) symmetrisch zu der Biegemaschine angeordnet. Dies vereinfacht den Umlauf der Haltevorrichtungen in ihren jeweiligen Fertigungskreisen.

Bei einer bevorzugten Ausführungsform des Fertigungssystems ist vorgesehen, dass das Fertigungssystem eine gemeinsame Plattform aufweist, auf der die Komponenten des Fertigungssystems angeordnet sind. Dies vereinfacht den Transport des Fertigungssystems. Über die gemeinsame Plattform kann das Fertigungssystem zudem einfach in eine übergeordnete Fertigungslinie eingebracht werden.

### Erfindungsgemäße Haltevorrichtung

In den Rahmen der Erfindung fällt auch eine Haltevorrichtung gemäß Anspruch 1.

Erfindungsgemäß ist somit eine Haltevorrichtung für einen Stator mit einem Grundkörper und einer Vielzahl von gebogenen und/oder geraden Stableitern vorgesehen. Die Haltevorrichtung weist zumindest einen ersten Satz von Fingern zum Eingreifen zwischen die Stableiter an einer ersten Stirnseite des Grundkörpers auf.

Die Haltevorrichtung kann eine einheitliche Schnittstelle zum Festlegen der Haltevorrichtung an Maschinen eines Fertigungssystems, insbesondere an der Biegemaschine, der Spreizmaschine und der Schweißmaschine sowie ggf. der Be- und Entladestation eines oben beschriebenen, erfindungsgemäßen Fertigungssystems aufweisen. Die Haltevorrichtung kann alternativ oder zusätzlich einen Kupplungsabschnitt, vorzugsweise einen Schnellwechselkupplungsabschnitt, insbesondere für ein Handhabungsgerät, aufweisen. Die Haltevorrichtung kann eine erste Komponente eines zentrierenden Spannsystems, insbesondere eines Nullpunktspannsystems, aufweisen. Vorzugsweise ist vorgesehen, dass die Haltevorrichtung ein Zentrierelement für eine radiale Anlage der Finger des ersten Satzes aufweist. Die Finger des ersten Satzes können jeweils ein elastisches Element zwischen einem Eingriffsabschnitt und einem Antriebsabschnitt des jeweiligen Fingers aufweisen. Vorteilhafterweise ist vorgesehen, dass die Haltevorrichtung eine erste drehbare Nutenscheibe zum Verschieben der Finger des ersten Satzes aufweist. Die Haltevorrichtung kann einen zweiten Satz von Fingern zum Eingreifen zwischen die Stableiter an einer zweiten Stirnseite des Grundkörpers aufweisen. Besonders bevorzugt ist eine Ausführungsform, bei der die Haltevorrichtung eine zweite drehbare Nutenscheibe zum Verschieben der Finger des zweiten Satzes aufweist. Ganz besonders bevorzugt sind die beiden Nutenscheiben über einen gemeinsamen Steuerschieber antreibbar. Der Steuerschieber kann ein Sicherungsmittel aufweisen, das in einem unbetätigten Zustand ein Verschieben des Steuerschiebers unterbindet.

Die erfindungsgemäße Haltevorrichtung weist weitere Merkmale der Haltevorrichtung des oben beschriebenen Fertigungssystems auf. Mittels der erfindungsgemäßen Haltevorrichtung können die oben beschriebenen Vorteile insbesondere auch außerhalb des erfindungsgemäßen Fertigungssystems nutzbar gemacht werden.

### Erfindungsgemäßes Fertigungsverfahren

In den Rahmen der Erfindung fällt auch ein Verfahren nach Anspruch 14 zum Fertigen eines Stators für eine elektrischen Maschine, insbesondere einen Elektromotor, wobei der Stator einen Grundkörper und eine Vielzahl von geraden und/oder gebogenen Stableitern aufweist. Das Verfahren wird mit einem oben beschriebenen, erfindungsgemäßen Fertigungssystem durchgeführt. Das Verfahren umfasst die Schritte
a) Festlegen, insbesondere Festklemmen, des Grundkörpers und der Stableiter in einer Haltevorrichtung, wobei Finger der Haltevorrichtung zwischen die Stableiter eingreifen,
b1) Verbringen der Haltevorrichtung zu einer Biegemaschine und Biegen von freien Enden der Stableiter,
b2) Verbringen der Haltevorrichtung zu einer Spreizmaschine und Aufspreizen der freien Enden in radialer Richtung,
c) Verbringen der Haltevorrichtung zu einer Schweißmaschine und Verschweißen der freien Enden von je wenigstens zweien der Stableiter,
d) Freigeben des Stators in der Haltevorrichtung, wobei die Finger aus dem Eingriff zwischen die Stableiter gelöst werden, und Entnehmen des Stators aus der Haltevorrichtung.

Während der Durchführung der Schritte b1), b2) und c) bleibt der Stator in der Haltevorrichtung festgelegt. Die Teilschritte b1) und b2) können in beliebiger Reihenfolge durchgeführt werden. Je nach Typ von Stator kann es vorteilhaft sein, zunächst den Teilschritt b1) und anschließend den Teilschritt b2) durchzuführen oder umgekehrt. Im Übrigen werden die Schritte des Verfahrens in der angegebenen Reihenfolge durchgeführt. Insbesondere wird der Schritt a) vor dem zuerst durchzuführenden Teilschritt b1) oder b2) durchgeführt. Die Schritte c) und d) werden in der angegebenen Reihenfolgen nach dem zuletzt durchgeführten Teilschritt b1) oder b2) durchgeführt. Zum Positionieren des Stators zur Durchführung der Fertigungsoperationen in den Schritten b1), b2) und c) kann die Haltevorrichtung an den jeweiligen Maschinen fixiert werden. Damit entfällt ein zeitraubendes und aufwendige Vorrichtungen erforderndes Fixieren des Stators unmittelbar an den einzelnen Maschinen. Durch den Eingriff der Finger der Haltevorrichtung kann ferner sichergestellt werden, dass sich die Stableiter im weiteren Verfahrensablauf nicht ungewollt relativ zum Grundkörper verschieben.

Vorzugsweise ist vorgesehen, dass die Schritte a) und d) in einer Be- und Entladestation durchgeführt werden, und dass die Haltevorrichtung zwischen den Schritten c) und d) zu der Be- und Entladestation verbracht wird. Die Be- und Entladestation kann die Verkettung des Fertigungssystems mit weiteren Einrichtungen erleichtern. Die Haltevorrichtung wird für die Durchführung der Schritte a) und d) typischerweise an der Be- und Entladestation festgelegt. Dies vereinfacht die Durchführung der Schritte a) und d).

Weitere Vorteile der Erfindung ergeben sich aus der Beschreibung und der Zeichnung. Erfindungsgemäß können die vorstehend genannten und die noch weiter ausgeführten Merkmale im Rahmen des Schutzbereichs der Ansprüche jeweils einzeln für sich oder zu mehreren in Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: ein erfindungsgemäßes Fertigungssystem mit einer Biegemaschine, die Teil zweier Fertigungskreise mit jeweils einer Spreizmaschine, einer Schweißmaschine, einer Be- und Entladestation sowie einem Handhabungsgerät ist, wobei für jeden der Fertigungskreise je eine erfindungsgemäße Haltevorrichtung für einen Stator vorgesehen ist, in einer schematischen Ansicht;
- Fig. 2a: einen Stator mit geraden und gebogenen Stableitern, in einer schematischen Perspektivansicht;
- Fig. 2b: den Stator von Fig. 2a in einer schematischen Aufsicht auf eine erste Stirnseite;
- Fig. 2c: eine erfindungsgemäße Haltevorrichtung mit einem ersten Satz von Fingern zum Halten eines Stators, wobei sich die Finger in einer geöffneten Stellung befinden, in einer schematischen Aufsicht;
- Fig. 2d: die Haltevorrichtung von Fig. 2c, wobei sich die Finger in einer geschlossenen Stellung befinden, in einer schematischen Aufsicht;
- Fig. 3a: eine erfindungsgemäße Haltevorrichtung mit einem ersten Satz von Fingern, die ein elastisches Element zwischen einem Eingriffsabschnitt und einem Antriebsabschnitt aufweisen, wobei eine erste Nutenscheibe mit den Eingriffsabschnitten zusammenwirkt, in einem schematischen Teilschnitt;
- Fig. 3b: die Haltevorrichtung von Fig. 3a weiterhin aufweisend einen zweiten Satz von Fingern, die mittels einer zweiten Nutenscheibe bewegbar sind, in einem schematischen Querschnitt;
- Fig. 4a: eine erfindungsgemäße Haltevorrichtung mit einem Stator, wobei erste Komponenten eines zentrierenden Spannsystems eine einheitliche Schnittstelle der Haltevorrichtung bilden, in einer schematischen Perspektivansicht;
- Fig. 4b: eine erste Komponente und eine komplementäre Komponente des zentrierenden Spannsystems der Haltevorrichtung von Fig. 4a, in einer schematischen Seitenansicht;
- Fig. 4c: die Haltevorrichtung von Fig. 4a in einer schematischen Schnittansicht mit Blick auf eine erste Nutenscheibe;
- Fig. 5a: ein Handhabungsgerät für ein Fertigungssystem gemäß Fig. 1 und eine erfindungsgemäße Haltevorrichtung mit einem Kupplungsabschnitt für das Handhabungsgerät, in einer schematischen Perspektivansicht;
- Fig. 5b: eine Haltevorrichtung gemäß Fig. 5a, aufweisend einen Steuerschieber zum gemeinsamen Betätigen zweier Nutenscheiben, in einem schematischen Querschnitt;
- Fig. 6: ein Ablaufdiagramm eines erfindungsgemäßen Verfahrens zum Fertigen von Statoren unter Verwendung eines der Fertigungskreise des Fertigungssystems von Fig. 1.

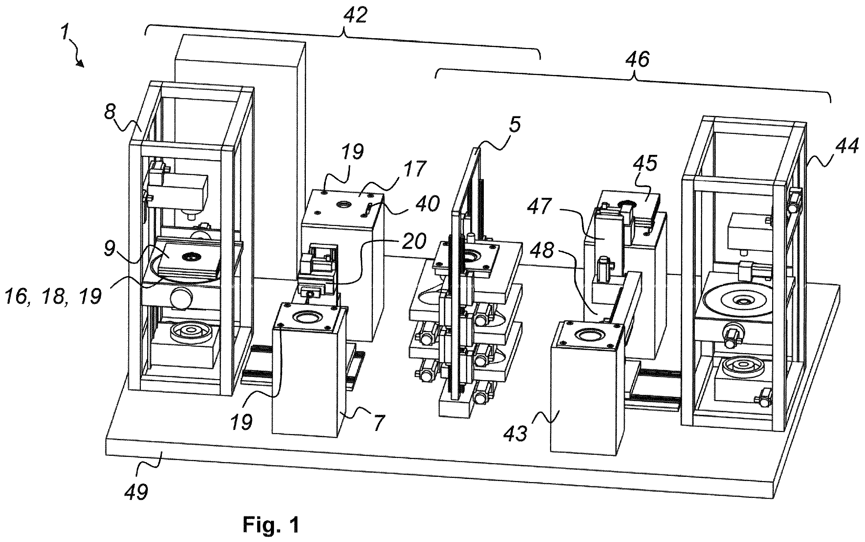

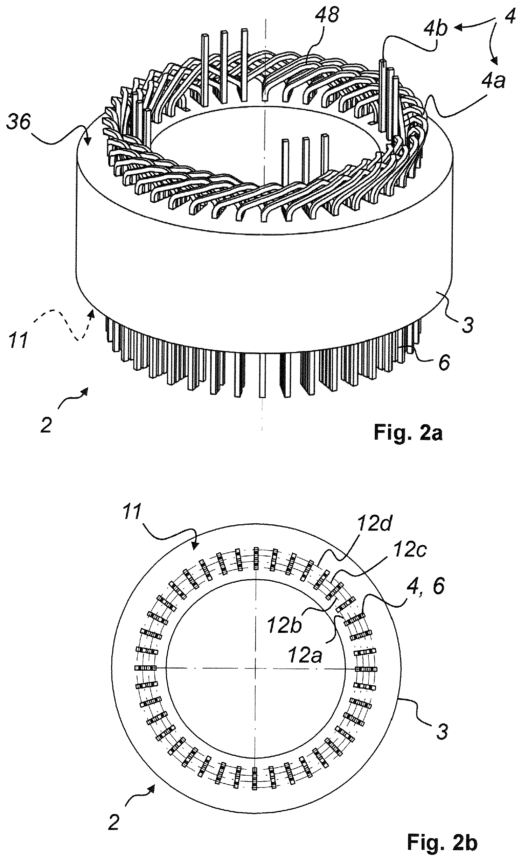

**Figur 1** zeigt eine Ausführungsform eines erfindungsgemäßen Fertigungssystems **1.** Bei dem Fertigungssystem 1 sind zwei Fertigungskreise **42, 46** eingerichtet. Jeder der Fertigungskreise 42, 46 dient zum Fertigen von Statoren (vgl. Figur 2a, 2b) für elektrische Maschinen wie Elektromotoren.

In **Figur 2a** ist ein Stator **2** in einer Perspektivansicht dargestellt. Der Stator 2 weist einen Grundkörper **3** auf. Der Grundkörper 3 ist mit einem Blechpaket ausgebildet. Der Stator 2 weist ferner eine Vielzahl von Stableitern 4 auf. Die Stableiter 4 sind teils als gebogene Stableiter **4a** und teils als gerade Stableiter **4b** ausgebildet. Freie Enden 6 der Stableiter 4 ragen über eine erste Stirnseite **11** des Grundkörpers 3 hinaus. Die gebogenen Stableiter 4a weisen jeweils einen Verbindungsabschnitt **48** auf, der über einer zweiten Stirnseite 36 des Grundkörpers 3 angeordnet ist. Die gebogenen Stableiter 4a weisen jeweils zwei freie Enden 6 auf, die von den Verbindungsabschnitten 48 abgewandt auf der ersten Stirnseite 11 des Grundkörpers 3 angeordnet sind. Die freien Enden 6 der gebogenen Stableiter 4a sind über im Grundkörper 3 aufgenommene gerade Längsabschnitte der Stableiter 4a mit dem jeweiligen Verbindungsabschnitt 48 verbunden. Im Folgenden wird ohne weitere Unterscheidung auf die Stableiter 4 Bezug genommen. Das Fertigungssystem 1 von Figur 1 dient insbesondere zum Verschweißen der freien Enden 6 der Stableiter 4, nachdem miteinander zu verschweißende freie Enden 6 einander durch Biegen der Stableiter 4 angenähert wurden.

**Figur 2b** zeigt den Stator 2 in einer Aufsicht auf die erste Stirnseite 11. Die Stableiter 4 sind hier in vier ringförmigen Lagen **12a-12d** angeordnet. Je nach Typ von Stator können auch weniger oder mehr als vier ringförmige Lagen vorgesehen sein, insbesondere bis zu zehn ringförmige Lagen (nicht näher dargestellt). Hier sind die ringförmigen Lagen 12a -12d als konzentrische Ringe angeordnet. In radialer Richtung folgen die Stableiter 4 der vier Lagen 12a-12d jeweils aufeinander; sie sind mit anderen Worten in Umfangsrichtung an denselben (Winkel-)Positionen angeordnet.

Das Fertigungssystem 1 (vgl. Figur 1) umfasst eine Biegemaschine **5.** Die Biegemaschine 5 dient zum Biegen der freien Enden 6 der Stableiter 4, so dass diese einander zum Verschweißen angenähert werden. Die Biegemaschine 5 ist Teil der beiden Fertigungskreise 42 und 46.

Das Fertigungssystem 1 umfasst für den ersten Fertigungskreis 42 auch eine Spreizmaschine **7,** eine Schweißmaschine **8,** eine Be- und Entladestation **17** und ein Handhabungsgerät **20.** Für den zweiten Fertigungskreis 46 umfasst das Fertigungssystem 1 auch eine weitere Spreizmaschine **43,** eine weitere Schweißmaschine **44,** eine weitere Be- und Entladestation **48** und ein weiteres Handhabungsgerät **47.** Das Fertigungssystem 1 umfasst eine erfindungsgemäße Haltevorrichtung **9,** die in dem ersten Fertigungskreis 42 umläuft. Das Fertigungssystem 1 umfasst ferner eine weitere erfindungsgemäße Haltevorrichtung **45,** die in dem zweiten Fertigungskreis 46 umläuft. Die vorgenannten Komponenten des Fertigungssystems 1 sind auf einer gemeinsamen Plattform **49** angeordnet. Insbesondere sind die Komponenten der beiden Fertigungskreise 42, 46 (abgesehen von den Haltevorrichtungen 9, 45) spiegelsymmetrisch bezüglich einer durch die Biegemaschine 5 verlaufenden, vertikalen Spiegelebene angeordnet. Die weiteren zum zweiten Fertigungskreis 46 gehörenden Komponenten 43, 44, 45, 47, 48 sind baugleich zu den Komponenten 7, 8, 9, 20, 17 des ersten Fertigungskreises 42.

Die zu fertigenden Statoren 2 werden in den Haltevorrichtungen 9, 45 fixiert. Mittels der Haltevorrichtungen 9, 45 werden die Statoren 2 zwischen den einzelnen Maschinen der Fertigungskreise 42, 46 transportiert und an den Maschinen befestigt. Zum Transport der Haltevorrichtungen 9, 45 dienen die Handhabungsgeräte 20, 47.

Bei einem Fertigungsdurchlauf in einem der Fertigungskreise 42 bzw. 46 werden zunächst die Einzelteile (Grundkörper 3, Stableiter 4) des Stators 2 in die an der Be- und Entladestation 20 bzw. 48 befestigte Haltevorrichtung 9 bzw. 45 eingesetzt (etwa mit einem nicht näher dargestellten Portalsystem) und in der Haltevorrichtung 9, 45 fixiert. Das Handhabungsgerät 20 bzw. 47 verbringt die Haltevorrichtung 9, 45 mit dem Stator 2 zunächst zu der Biegemaschine 5. Die Biegemaschine 5 biegt die freien Enden 6 der Stableiter 4, insbesondere in azimutaler Richtung, so dass sie einander, insbesondere paarweise oder in Gruppen von mehr als zwei freien Enden 6, angenähert werden. Sodann verbringt das Handhabungsgerät 20, 47 die Haltevorrichtung 9, 43 mit dem Stator 2 zu der Spreizmaschine 7 bzw. 43. Die Spreizmaschine 7, 43 spreizt die freien Enden 6 der Stableiter 4 in radialer Richtung auseinander, so dass nicht miteinander zu verschweißende freie Enden 6 einander nicht berühren. Alternativ kann vorgesehen sein, dass zunächst die freien Enden 6 mittels der Spreizmaschine 7 bzw. 43 in radialer Richtung auseinandergespreizt werden und sodann mittels der Biegemaschine 5 gebogen werden. Das Handhabungsgerät 20 bzw. 47 verbringt die Haltevorrichtung 9 bzw. 45 in diesem Fall zunächst zur Spreizmaschine 7 bzw. 43 und sodann zur Biegemaschine 5.

Anschließend verbringt das Handhabungsgerät 20, 47 die Haltevorrichtung 9, 45 mit dem Stator 2 zu der Schweißmaschine 8 bzw. 44. Die Schweißmaschine 8, 44 verschweißt die freien Enden 6 der Stableiter 4 paarweise miteinander. Es kann alternativ vorgesehen sein, dass jeweils die freien Enden 6 von mehr als zwei Stableitern 4 miteinander verschweißt werden. Anschließend verbringt das Handhabungsgerät 20, 47 die Haltevorrichtung 9, 45 mit dem Stator 2 zurück zu der Be- und Entladestation 17, 48. Der bearbeitete Stator 2 wird dort aus der Haltevorrichtung 9, 45 entnommen.

Alternativ wäre es denkbar, den zu fertigenden Stator 2 außerhalb des Fertigungssystems 1 in der Haltevorrichtung 9 bzw. 45 festzuklemmen und die Haltevorrichtung 9, 45 sodann über die Be- und Entladestation 7 bzw. 48 in den Fertigungskreis 42 bzw. 46 einzuschleusen. Nach dem Fertigungsdurchlauf könnte die Haltevorrichtung 9, 45 mit dem Stator 2 über die Be- und Entladestation 7, 48 aus dem Fertigungskreis 42, 46 ausgeschleust werden. Abschließend könnte der Stator 2 außerhalb des Fertigungssystems 1 aus der Haltevorrichtung 9, 45 gelöst werden.

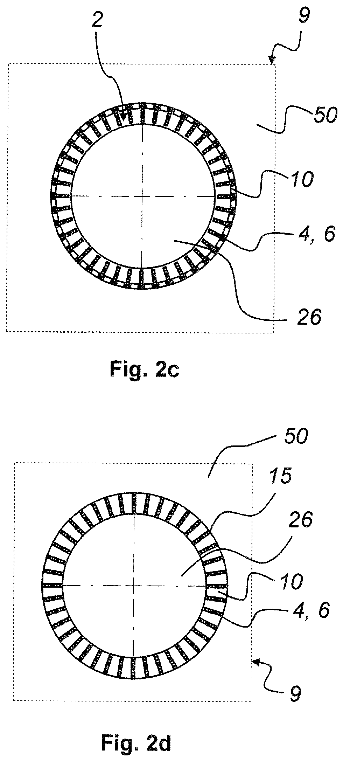

**Figur 2c** zeigt eine erfindungsgemäße Haltevorrichtung 9 mit einem Stator 2 in einer Aufsicht. Die Haltevorrichtung 9 weist ein Zentrierelement **26** auf. Das Zentrierelement 26 ist radial innerhalb der freien Enden 6 der Stableiter 4 angeordnet. Mit anderen Worten durchragen die freien Enden 6 der Stableiter 4 einen Zwischenraum zwischen dem Zentrierelement 26 und einem Korpus **50** der Haltevorrichtung 9.

Die Haltevorrichtung 9 weist einen ersten Satz von Fingern 10 auf. Die Finger 10 sind verschieblich in der Haltevorrichtung 9 gelagert. In Figur 2c befinden sich die Finger 10 in einer nach radial außen ausgerückten Stellung, in der die Haltevorrichtung 9 geöffnet ist.

**Figur 2d** zeigt die Anordnung von Figur 2c, wobei sich die Finger 10 der Haltevorrichtung 9 nun in einer nach radial innen eingerückten Stellung befinden, in der die Haltevorrichtung 9 geschlossen ist. In der geschlossenen Stellung greifen die Finger 10 mit ihrer radial innen liegenden Endseite auf der ersten Stirnseite 11 des Grundkörpers 3 des Stators 2 (vgl. Figur 2a) zwischen die Stableiter 4 ein. In der geschlossenen Stellung liegen die Finger 10 an dem Zentrierelement 26 an. Die Stableiter 4 sind zwischen den Finger 10 eingeklemmt. Ferner liegen die Stableiter 4 der radial innersten Lage 12a (vgl. Fig. 2b) an dem Zentrierelement 26 an.

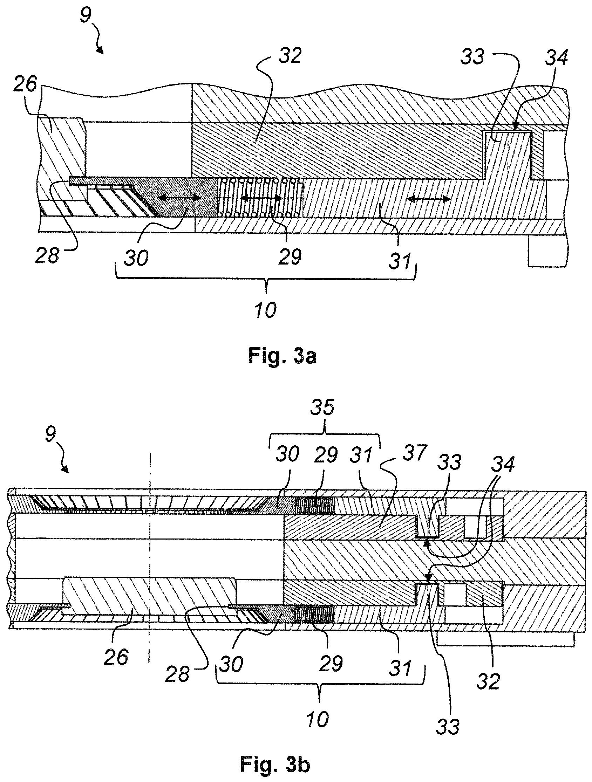

**Figur 3a** zeigt einen Teilbereich der Haltevorrichtung 9 in einer Schnittdarstellung. Zu erkennen ist einer der Finger 10 des ersten Satzes. Der Finger 10 weist einen Eingriffsabschnitt **30** und einen Antriebsabschnitt **31** auf. Der Eingriffsabschnitt 30 und der Antriebsabschnitt 31 sind über ein elastisches Element **29,** hier eine zylindrische Schraubenfeder, miteinander gekoppelt. Die Haltevorrichtung 9 befindet sich in Figur 3a in der geschlossenen Stellung. Der Eingriffsabschnitt 30 des Fingers 10 ist nach radial innen eingerückt. Der Finger 10 greift mit seinem Eingriffsabschnitt 30 in eine an dem Zentrierelement 26 ausgebildete Umfangsnut **28** ein.

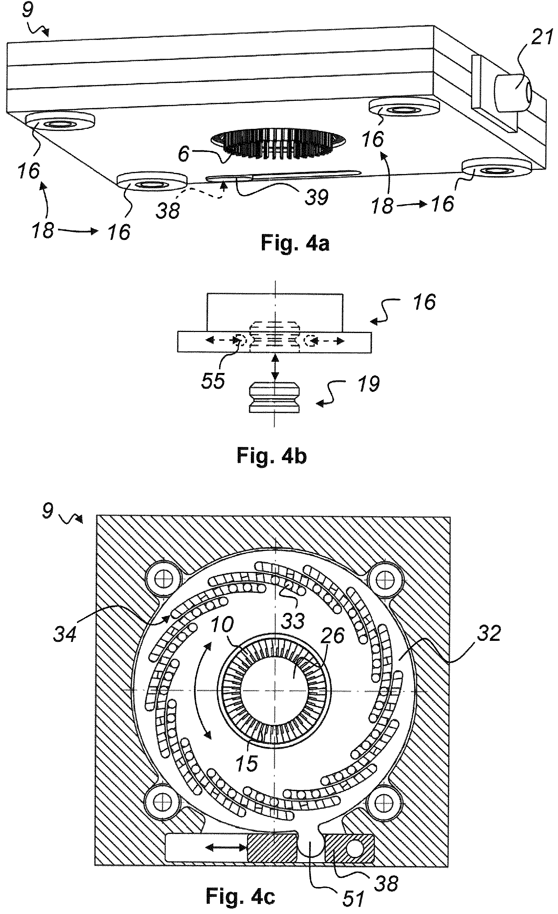

Zum Verschieben des Eingriffsabschnitts 30 zwischen der geschlossenen Stellung und der hier nicht gezeigten geöffneten Stellung dient der Antriebsabschnitt 31. Der Finger 10 weist an dem Antriebsabschnitt 31 einen Zapfen 33 auf. Der Zapfen 33 greift in eine spiralförmig verlaufende Nut **34** einer ersten Nutenscheibe 32 ein, vgl. auch **Figur 4c****.** Die Nutenscheibe 32 ist drehbar in der Haltevorrichtung 9 gelagert. Beim Drehen der Nutenscheibe 32 wird der Antriebsabschnitt 31 in radialer Richtung verschoben. Über das elastische Element 29 wird die Bewegung des Antriebsabschnitts 31 auf den Eingriffsabschnitt 30 übertragen. Wenn der Eingriffsabschnitt 30 an dem Zentrierelement 26 anliegt kann der Antriebsabschnitt 31 unter zunehmender Federkraft des elastischen Elements 29 weiter nach radial innen vorgeschoben werden. Auf diese Weise kann der Eingriffsabschnitt 30 gegen das Zentrierelement 26 bzw. die einzuklemmenden Stableiter 4 vorgespannt werden.

**Figur 3b** zeigt einen gegenüber Figur 3a größeren Ausschnitt der Haltevorrichtung 9 in einer Schnittansicht. Zu erkennen ist, dass das Zentrierelement 28 in der Form einer Scheibe ausgebildet ist, die an ihrem Umfang die Umfangsnut 28 aufweist.

Die Haltevorrichtung 9 weist zusätzlich zum ersten Satz von Fingern 10 einen zweiten Satz von Fingern **35** auf. Die Finger 35 des zweiten Satzes dienen zum Eingreifen zwischen die Stableiter 4 an der zweiten Stirnseite 36 (vgl. Figur 2a) des Grundkörpers 3 des Stators 2. Die Finger 10, 35 beider Sätze befinden sich in Figur 3b in der geschlossenen Stellung. Man beachte, dass für die Finger 35 des zweiten Satzes kein Zentrierelement vorgesehen ist.

Die Finger 35 des zweiten Satzes können wie die Finger 10 des ersten Satzes aufgebaut und ausgebildet sein. Insbesondere weisen die Finger 35 je einen Eingriffsabschnitt 30, einen Antriebsabschnitt 31 und ein dazwischenliegendes elastisches Element 29 auf. Zum Verschieben der Finger 35 des zweiten Satzes ist eine zweite Nutenscheibe **37** vorgesehen, die drehbar in der Haltevorrichtung 9 gelagert ist. Die Antriebsabschnitte 31 der Finger 35 weisen je einen Zapfen 33 auf, der (wie bei den Fingern 10 des ersten Satzes) in eine spiralförmig verlaufende Nut 34 der zweiten Nutenscheibe 37 eingreift. Die zweite Nutenscheibe 37 kann spiegelsymmetrisch zu der ersten Nutenscheibe 32 ausgebildet sein.

**Figur 4c** zeigt einen Horizontalschnitt durch die Haltevorrichtung 9. Die erste Nutenscheibe 32 weist mehrere spiralförmige Nuten 34 auf, in die jeweils mehrere Finger 10 des ersten Satzes mit ihren Zapfen 33 eingreifen. Die Zapfen 33 der in dieselbe Nut 34 eingreifenden Finger 10 sind daher in unterschiedlichen radialen Positionen an den Antriebsabschnitten 31 angebracht. Die Eingriffsabschnitte 30 aller Finger 10 sind demgegenüber baugleich. Auch die elastischen Elemente 29 aller Finger 10 sind jeweils gleich zueinander.

Die Finger 10 weisen je eine Schulter **15** auf. Die Schulter 15 dient dazu, die Stableiter 4 in radialer Richtung gegeneinander und gegen das Zentrierelement 26 zu pressen. In einer nicht dargestellten Alternative ist es auch denkbar, dass die Finger 10 je zwei Schultern 15 aufweisen.

Die Haltevorrichtung 9 weist einen Steuerschieber **38** zum Antreiben der Nutenscheiben 32, 37 auf. Der Steuerschieber 38 ist in der Haltevorrichtung 9 geradlinig verfahrbar. Die Nutenscheiben 32 und 37 greifen je mit einem Fortsatz **51** in den Steuerschieber 38 ein. Durch Verschieben des Steuerschiebers 38 kann eine Drehbewegung der Nutenscheiben 32, 37 bewirkt werden.

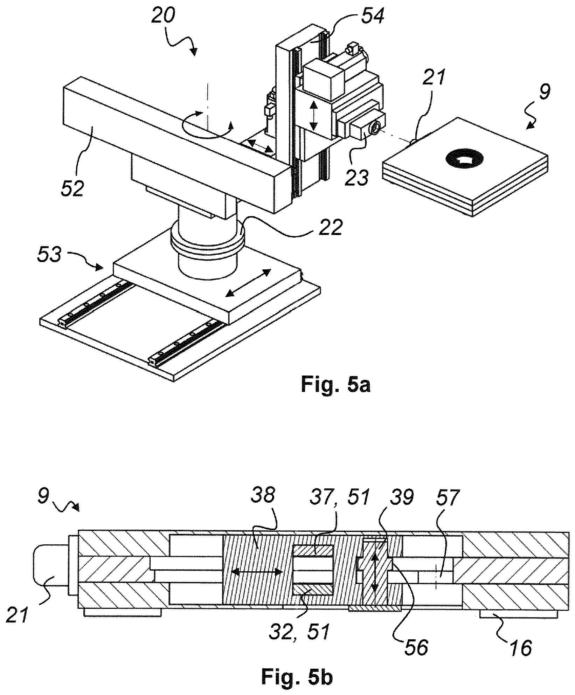

In **Figur 5b** ist zu erkennen, dass der Steuerschieber 38 ein Sicherungsmittel **39** aufweist. In einem unbetätigten Zustand verhindert das Sicherungsmittel 39 ein Verschieben des Steuerschiebers 38. Insbesondere verhindert das unbetätigte Sicherungsmittel 39 ein Öffnen der Haltevorrichtung 9. Ein ungewolltes Lösen des Stators 2 aus der Haltevorrichtung 9 kann auf diese Weise verhindert werden. Im unbetätigten Zustand kann ein Kragen **56** des Sicherungsmittels 39 in einer Rastausnehmung **57** der Haltevorrichtung 9 verrastet sein. Das Sicherungsmittel 39 kann hierzu nach unten (bezüglich der Orientierung in Figur 5b) vorgespannt sein. In Figur 5b ist das Sicherungsmittel 39 in einem betätigten Zustand gezeigt. Im betätigten Zustand des Sicherungsmittels 39 kann der Steuerschieber 38 verschoben werden, um die Haltevorrichtung 9 zu öffnen bzw. zu schließen, so dass der Stator 2 freigegeben bzw. eingeklemmt wird.

Um das Sicherungsmittel 39 in den betätigten Zustand (betätigte Stellung) zu verbringen ist an der Be- und Entladestation 17 (vgl. Figur 1) ein Betätigungselement **40** vorgesehen. Wenn die Haltevorrichtung 9 an der Be- und Entladestation 17 gehalten ist, drückt das Betätigungselement 40 das Sicherungsmittel 39 in die betätigte Stellung. Der Kragen 56 des Sicherungsmittels 39 wird dadurch aus der Rastausnehmung 57 gelöst. Das Betätigungselement 40 kann sodann den Steuerschieber 38 für ein Öffnen bzw. Schließen der Haltevorrichtung 9 verschieben.

In Figur 5b ist ferner zu erkennen, das die Haltevorrichtung 9 einen Kupplungsabschnitt **21,** hier einen Schnellwechselkupplungsabschnitt, aufweist. Mittels des Kupplungsabschnitts 21 kann die Haltevorrichtung 9 mit dem Handhabungsgerät 20 verbunden werden. Das Handhabungsgerät 20 kann sodann die Haltevorrichtung 9 zwischen den Maschinen 5, 7, 8, 17 des Fertigungssystems 1 transportieren.

**Figur 5a** zeigt das Handhabungsgerät 20 und die Haltevorrichtung 9. Das Handhabungsgerät 20 weist einen Greifer **23** zur Aufnahme des Kupplungsabschnitts 21 der Haltevorrichtung 9 auf. Der Greifer 23 ist über einen Drehtisch 22 um eine vertikale Achse drehbar und entlang eines Arms **52** radial zum Drehtisch 22 verfahrbar. Der Drehtisch 22 ist ferner mittels einer Führungseinrichtung **53** in horizontaler Richtung verfahrbar. Zudem ist der Greifer über einen Ausleger **54** in vertikaler Richtung verfahrbar.

**Figur 4a** zeigt die Haltevorrichtung 9 in einer perspektivischen Ansicht. Im in Figur 4a hinteren Bereich der Haltevorrichtung 9 ist ein Betätigungsabschnitt des zuvor beschriebene Sicherungsmittels 39 des Steuerschiebers 38 zu erkennen.

Die Haltevorrichtung 9 weist eine einheitliche Schnittstelle **18** zum Befestigen der Haltevorrichtung 9 an der Biegemaschine 5, der Spreizmaschine 7, der Schweißmaschine 8 und der Be- und Entladestation 17 auf. Die einheitliche Schnittstelle 18 umfasst hier vier Kopplungselemente **16.** Die Kopplungselemente 16 sind als erste Komponenten eines zentrierenden Spannsystems, hier eines Nullpunktspannsystems, ausgebildet.

**Figur 4b** zeigt eine solche erste Komponente und eine komplementäre zweite Komponente des zentrierenden Spannsystems. Die erste Komponente ist durch eines der Kopplungselemente 16 gebildet. Die zweite Komponente ist durch eine komplementäre Aufnahme **19** gebildet. Das Kopplungselement 16 kann auf die komplementäre Aufnahme 19 aufgesetzt werden. Das Kopplungselement 16 weist Spannmittel 55 auf. Mittels der Spannmittel 55 können das Kopplungselement 16 und die komplementäre Aufnahme 19 in einer definierten Relativposition aneinander fixiert werden. Die Spannmittel 55 sind hierzu nach radial innen bewegbar. Um das Kopplungselement 16 und die Aufnahme 19 voneinander lösen zu können bzw. um das Kopplungselement 16 auf die Aufnahme 19 aufsetzen zu können, sind die Spannmittel 55 nach radial außen bewegbar. In Figur 4b befinden sich die Spannmittel 55 im nach radial außen bewegten Zustand.

An der Biegemaschine 5, der Spreizmaschine 7, der Schweißmaschine 8 und der Be- und Entladestation 17 sind jeweils vier solcher komplementären Aufnahmen 19 vorgesehen, vgl. Figur 1, die zusammen eine zu der einheitlichen Schnittstelle komplementäre Aufnahmeeinrichtung bilden. Die vier komplementären Aufnahmen 19 sind dabei jeweils für eine Aufnahme der vier korrespondierenden Kopplungselemente 16 der Haltevorrichtung 9 angeordnet. Die Haltevorrichtung 9 kann somit über dieselben ersten Komponenten des zentrierenden Spannsystems an allen Maschinen 5, 7, 8, 17 des ersten Fertigungskreises 42 des Fertigungssystems 1 festgelegt werden. Die Koppelelemente 16 bilden daher zusammen die einheitliche Schnittstelle 18. Entsprechendes gilt für die weitere Haltevorrichtung 45 und den zweiten Fertigungskreis 46.

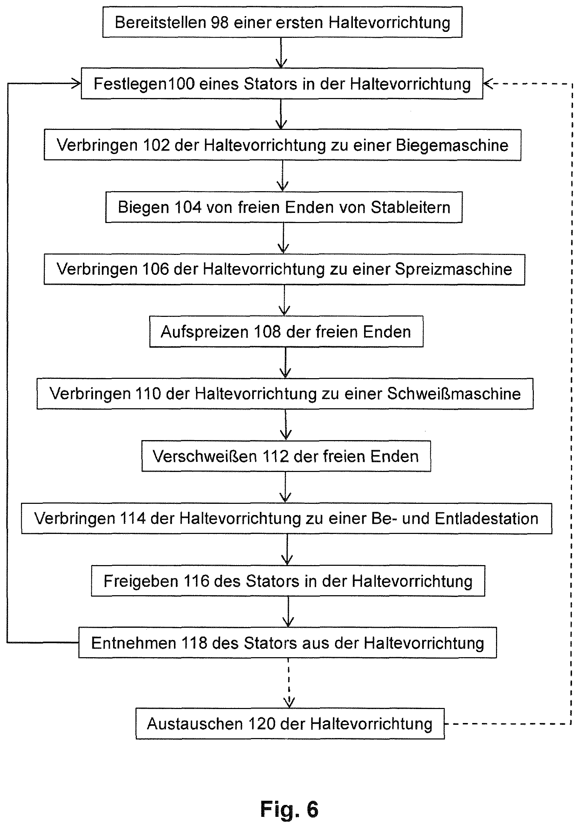

**Figur 6** zeigt einen Ablaufplan eines Verfahrens zum Fertigen von Statoren 2 mit Stableitern 4, vgl. Figuren 2a, 2b, mittels eines Fertigungssystems, beispielsweise des Fertigungssystems 1 gemäß Figur 1.

Eine erste Haltevorrichtung 9 wird zunächst in einem Schritt **98** bereitgestellt. In einem Schritt **100** wird sodann ein Stator 2 an der ersten Haltevorrichtung 9 festgelegt. Der Stator 2 kann hierbei insbesondere durch Einrücken von Fingern 10, 35 eines ersten und zweiten Satzes nach radial innen festgeklemmt werden.

Die Finger 10, 35 greifen dabei zwischen die Stableiter 4 ein. Während der Durchführung des Schritts 100 ist die Haltevorrichtung 9 an einer Be- und Entladestation 17 befestigt.

Sodann wird die Haltevorrichtung 9 mit dem Stator 2 in einem Schritt **102** mittels eines Handhabungsgeräts 20 zu einer Biegemaschine 5 verbracht. Dort werden in einem Schritt **104** die freien Enden 6 der Stableiter 4 gebogen, so dass miteinander zu verschweißende freie Enden 6 aneinander angenähert werden.

Daraufhin wird die Haltevorrichtung 9 mit dem Stator 2 in einem Schritt **106** mittels des Handhabungsgeräts 20 zu einer Spreizmaschine 7 verbracht. Dort werden die freien Enden 6 in einem Schritt **108** in radialer Richtung aufgespreizt.

In einer nicht näher dargestellten Verfahrensvariante können die Schritte 106 und 108 vor den Schritten 102 und 104 durchgeführt werden. Bei dieser Variante folgen also auf den Schritt 100 die Schritte 106 und 108; darauf folgen die Schritte 102 und 104.

Anschließend wird die Haltevorrichtung 9 mit dem Stator 2 in einem Schritt **110** mittels des Handhabungsgeräts 20 zu einer Schweißmaschine 8 verbracht. Dort werden die freien Enden 6 in einem Schritt **112** paarweise oder zu mehreren miteinander verschweißt.

Nun wird die Haltevorrichtung 9 mit dem Stator 2 in einem Schritt **114** mittels des Handhabungsgeräts 20 zurück zu der Be- und Entladestation 17 verbracht. Die Haltevorrichtung 9 wird an der Be- und Entladestation 17 befestigt. Während der Durchführung der Schritte 102 bis einschließlich 114 ist der Stator 2 stets in der Haltevorrichtung 9 fixiert. Sodann wird der Stator 2 in einem Schritt **116** in der Haltevorrichtung 9 freigegeben, indem die Finger 10, 35 nach radial außen ausgerückt werden, so dass sie nicht mehr zwischen die Stableiter 4 eingreifen. Abschließend wird der Stator 2 in einem Schritt **118** aus der Haltevorrichtung 9 entnommen.

Sodann können mit den oben beschriebenen Schritten 100 bis 118 weitere Verfahrensdurchläufe unter Verwendung derselben Haltevorrichtung 9 zur Fertigung weiterer gleichartiger Statoren 2 durchgeführt werden. Dies ist in Figur 6 durch den durchgezogenen Pfeil von Schritt 118 zu Schritt 100 angedeutet.

Parallel zu den Fertigungsdurchläufen der Haltevorrichtung 9 in dem ersten Fertigungskreis 42 können entsprechende Fertigungsdurchläufe mit einer weiteren Haltevorrichtung 45 in einem zweiten Fertigungskreis 46 mit der Biegemaschine 5, einer weiteren Spreizmaschine 43, einer weiteren Schweißmaschine 44, einer weiteren Be- und Entladestation 48 und einem weiteren Handhabungsgerät 47 durchgeführt werden. Die Fertigungskreise 42, 46 sind dabei zueinander (zeitlich) versetzt getaktet, so dass die Biegemaschine 5 in beiden Fertigungskreisen 42, 46 benutzt werden kann. Die Haltevorrichtungen 9 und 45 sind typischerweise baugleich und für denselben Typ von Stator 2 vorgesehen.

Nach einem oder mehreren von Durchläufen mit der ersten Haltevorrichtung 9 kann die Haltevorrichtung 9 in einem Schritt **120** gegen eine zweite Haltevorrichtung für einen anderen Typ von Stator ausgetauscht werden, vgl. gestrichelter Pfeil unten in Figur 6. Der andere Typ von Stator kann insbesondere eine andere Größe als der erste Typ von Stator 2 aufweisen. Entsprechend kann die zweite Haltevorrichtung sich in der Größe ihrer Aufnahme für den Stator von der ersten Haltevorrichtung 9 unterscheiden. Schnittstellen 18 zur Verbindung der Haltevorrichtungen mit den Maschinen 5, 7, 8, 17 des Fertigungssystems 1 sind demgegenüber bei der ersten Haltevorrichtung 9 und der zweiten Haltevorrichtung für den Stator anderen Typs identisch ausgebildet. Beim Wechsel des zu fertigenden Typs von Stator kann daher Aufwand zur Umrüstung des Fertigungssystems 1 bezüglich Befestigungsmechaniken vermieden oder zumindest verringert werden.

Mit dem Austausch 120 der im ersten Fertigungskreis 42 umlaufenden ersten Haltevorrichtung 9 gegen eine zweite Haltevorrichtung für einen anderen Typ von Stator kann auch die im zweiten Fertigungskreis 46 umlaufende weitere erste Haltevorrichtung 47 gegen eine weitere zweite Haltevorrichtung für einen anderen Typ von Stator ausgetauscht werden, wobei wiederum die weitere zweite Haltevorrichtung für den zweiten Fertigungskreis 46 typischerweise baugleich zu der zweiten Haltevorrichtung für den ersten Fertigungskreis 42 ist.

### Bezugszeichenliste:

Fertigungssystem 1
Stator 2
Grundkörper 3
gebogene Stableiter 4a
gerade Stableiter 4b
Stableiter 4
Biegemaschine 5
freie Enden 6
Spreizmaschine 7
Schweißmaschine 8
Haltevorrichtung 9
erster Satz von Fingern 10
erste Stirnseite 11
ringförmige Lagen 12a-12d
Schulter 15
Kopplungselemente 16
Be- und Entladestation 17
einheitliche Schnittstelle 18
komplementäre Aufnahme 19
Handhabungsgerät 20
Kupplungsabschnitt 21
Drehtisch 22
Greifer 23
Zentrierelement 26
Umfangsnut 28
elastisches Element 29
Eingriffsabschnitt 30
Antriebsabschnitt 31
erste Nutenscheibe 32
Zapfen 33
Nut 34
zweiter Satz von Fingern 35
zweiten Stirnseite 36
zweite Nutenscheibe 37
Steuerschieber 38
Sicherungsmittel 39
Betätigungselement 40
erster Fertigungskreis 42
weitere Spreizmaschine 43
weitere Schweißmaschine 44
weitere Haltevorrichtung 45
zweiter Fertigungskreis 46
weiteres Handhabungsgerät 47
weitere Be- und Entladestation 48
Plattform 49
Korpus 50
Fortsatz 51
Arm 52
Führungseinrichtung 53
Ausleger 54
Spannmittel 55
Kragen 56
Rastausnehmung 57
Bereitstellen 98 einer ersten Haltevorrichtung
Festlegen 100 eines Stators in der Haltevorrichtung
Verbringen 102 der Haltevorrichtung zu einer Biegemaschine
Biegen 104 von freien Enden
Verbringen 106 der Haltevorrichtung zu einer Spreizmaschine
Aufspreizen 108 der freien Enden
Verbringen 110 der Haltevorrichtung zu einer Schweißmaschine
Verschweißen 112 der freien Enden
Verbringen 114 der Haltevorrichtung zu einer Be- und Entladestation
Freigeben 116 des Stators in der Haltevorrichtung
Entnehmen 118 des Stators aus der Haltevorrichtung
Austauschen 120 der ersten Haltevorrichtung gegen eine zweite Haltevorrichtung anderen Typs

## Patentansprüche

1. Haltevorrichtung (9) für einen Stator (2) mit einem Grundkörper (3) und einer Vielzahl von gebogenen und/oder geraden Stableitern (4), wobei die Haltevorrichtung (9) zumindest einen ersten Satz von Fingern (10) zum Eingreifen zwischen die Stableiter (4) an einer ersten Stirnseite (11) des Grundkörpers (3) aufweist, wobei die Haltevorrichtung (9) eine erste drehbare Nutenscheibe (32) zum Verschieben der Finger (10) des ersten Satzes aufweist, **dadurch gekennzeichnet, dass** die Nutenscheibe (32) über einen Steuerschieber (38) angetrieben wird, und dass der Steuerschieber (38) ein Sicherungsmittel (39) aufweist, das in einem unbetätigten Zustand ein Verschieben des Steuerschiebers (38) unterbindet.

2. Fertigungssystem (1) zum Fertigen eines Stators (2) für eine elektrische Maschine, insbesondere einen Elektromotor, wobei der Stator (2) einen Grundkörper (3) und eine Vielzahl von gebogenen und/oder geraden Stableitern (4) aufweist,
wobei das Fertigungssystem (1) Folgendes aufweist:
- eine Biegemaschine (5) zum Biegen von freien Enden (6) der Stableiter (4),
- eine Spreizmaschine (7) zum Aufspreizen der freien Enden (6) der Stableiter (4) in radialer Richtung,
- eine Schweißmaschine (8) zum Verschweißen der freien Enden (6) von je wenigstens zwei Stableitern (4),
- eine Haltevorrichtung (9) nach Anspruch 1 für den Stator (2),
wobei die Haltevorrichtung (9) an der Biegemaschine (5), der Spreizmaschine (7) und der Schweißmaschine (8) festlegbar ist,
wobei das Fertigungssystem (1) weiterhin eine Be- und Entladestation (17) für die Haltevorrichtung (9) aufweist, und wobei an der Be- und Entladestation (17) ein Betätigungselement (40) für das Sicherungsmittel (39) ausgebildet ist.

3. Fertigungssystem (1) nach Anspruch 2,
**dadurch gekennzeichnet, dass**
die Haltevorrichtung (9) eine einheitliche Schnittstelle (18) zum Festlegen der Haltevorrichtung (9) an der Biegemaschine (5), der Spreizmaschine (7) und der Schweißmaschine (8) aufweist.

4. Fertigungssystem (1) nach einem der vorhergehenden Ansprüche 2 oder 3, weiterhin aufweisend ein Handhabungsgerät (20) zum Verbringen der Haltevorrichtung (9) zu der Biegemaschine (5), der Spreizmaschine (7) und der Schweißmaschine (8), insbesondere wobei die Haltevorrichtung (9) einen Kupplungsabschnitt (21), vorzugsweise einen Schnellwechselkupplungsabschnitt, für das Handhabungsgerät (20) aufweist.

5. Fertigungssystem (1) nach einem der vorhergehenden Ansprüche 2 bis 4, **dadurch gekennzeichnet, dass** die Haltevorrichtung (9) eine erste Komponente eines zentrierenden Spannsystems, insbesondere eines Nullpunktspannsystems, aufweist, und dass die Biegemaschine (5), die Spreizmaschine (7) und die Schweißmaschine (8) jeweils eine komplementäre Komponente des zentrierenden Spannsystems aufweisen.

6. Fertigungssystem (1) nach einem der vorhergehenden Ansprüche 2 bis 5, **dadurch gekennzeichnet, dass** die Haltevorrichtung (9) ein Zentrierelement (26) für eine radiale Anlage der Finger (10) des ersten Satzes aufweist.

7. Fertigungssystem (1) nach einem der vorhergehenden Ansprüche 2 bis 6, **dadurch gekennzeichnet, dass** die Finger (10) jeweils ein elastisches Element (29) zwischen einem Eingriffsabschnitt (30) und einem Antriebsabschnitt (31) des jeweiligen Fingers (10) aufweisen.

8. Fertigungssystem (1) nach einem der vorhergehenden Ansprüche 2 bis 7, **dadurch gekennzeichnet, dass** die Haltevorrichtung (9) einen zweiten Satz von Fingern (35) zum Eingreifen zwischen die Stableiter (4) an einer zweiten Stirnseite (36) des Grundkörpers (3) aufweist.

9. Fertigungssystem (1) nach Anspruch 8,
**dadurch gekennzeichnet, dass**
die Haltevorrichtung (9) eine zweite drehbare Nutenscheibe (37) zum Verschieben der Finger (35) des zweiten Satzes aufweist.

10. Fertigungssystem (1) nach Anspruch 9,
**dadurch gekennzeichnet, dass**
die beiden Nutenscheiben (32, 37) über den Steuerschieber (38) gemeinsam antreibbar sind.

11. Fertigungssystem (1) nach einem der vorhergehenden Ansprüche 2-10, **dadurch gekennzeichnet, dass** die Biegemaschine (5), die Spreizmaschine (7) und die Schweißmaschine (8) einen ersten Fertigungskreis (42) für einen Umlauf der Haltevorrichtung (9) bilden, dass das Fertigungssystem (1) eine weitere Spreizmaschine (43), eine weitere Schweißmaschine (44) und eine weitere Haltevorrichtung (45) für einen Stator (2) aufweist, und dass die Biegemaschine (5), die weitere Spreizmaschine (43) und die weitere Schweißmaschine (44) einen zweiten Fertigungskreis (46) für einen Umlauf der weiteren Haltevorrichtung (45) bilden.

12. Fertigungssystem (1) nach einem der vorhergehenden Ansprüche 2-11, **dadurch gekennzeichnet, dass** das Fertigungssystem (1) eine gemeinsame Plattform (49) aufweist, auf der die Komponenten des Fertigungssystems (1) angeordnet sind.

13. Haltevorrichtung (9) nach Anspruch 1,
**dadurch gekennzeichnet, dass**
die die Haltevorrichtung (9) einen zweiten Satz von Fingern (35) zum Eingreifen zwischen die Stableiter (4) an einer zweiten Stirnseite (36) des Grundkörpers (3) aufweist, dass die Haltevorrichtung (9) eine zweite drehbare Nutenscheibe (37) zum Verschieben der Finger (35) des zweiten Satzes aufweist, und dass die beiden Nutenscheiben (32, 37) über den Steuerschieber (38) gemeinsam antreibbar sind.

14. Verfahren zum Fertigen eines Stators (2) für eine elektrische Maschine, insbesondere einen Elektromotor, mit einem Fertigungssystem nach einem der Ansprüche 2 bis 12, mit den Schritten
a) Festlegen (100), insbesondere Festklemmen, des Grundkörpers (3) und der Stableiter (4) in der Haltevorrichtung (9, 45), wobei die Finger (10, 35) der Haltevorrichtung (9, 45) zwischen die Stableiter (4) eingreifen,
b1) Verbringen (102) der Haltevorrichtung (9, 45) zu der Biegemaschine (5) und Biegen (104) der freien Enden (6) der Stableiter (4),
b2) Verbringen (106) der Haltevorrichtung (9, 45) zu der Spreizmaschine (7, 43) und Aufspreizen (108) der freien Enden (6) in radialer Richtung,
c) Verbringen (110) der Haltevorrichtung (9, 45) zu der Schweißmaschine (8, 44) und Verschweißen (112) der freien Enden (6) von je wenigstens zweien der Stableiter (4),
d) Freigeben (116) des Stators (2) in der Haltevorrichtung (9, 45), wobei die Finger (10, 35) aus dem Eingriff zwischen die Stableiter (4) gelöst werden, und Entnehmen (118) des Stators (2) aus der Haltevorrichtung (9, 45).

15. Verfahren nach Anspruch 14, **dadurch gekennzeichnet, dass** die Schritte a) und d) in der Be- und Entladestation (17, 48) durchgeführt werden, und dass die Haltevorrichtung (9, 45) zwischen den Schritten c) und d) zu der Be- und Entladestation (17, 48) verbracht wird (114).

16. Verfahren nach Anspruch 14 oder 15, **dadurch gekennzeichnet, dass** zunächst wenigstens ein Verfahrensdurchlauf mit einer ersten Haltevorrichtung (9, 45) erfolgt, und dass sodann wenigstens ein Verfahrensdurchlauf mit einer zweiten Haltevorrichtung für einen Stator anderen Typs erfolgt.

## Claims

1. A holding device (9) for a stator (2) having a main body (3) and a multiplicity of bent and/or straight bar conductors (4), wherein the holding device (9) has at least one first set of fingers (10) for engaging between the bar conductors (4) at a first end side (11) of the main body (3), wherein the holding device (9) has a first rotatable cam disk (32) for displacing the fingers (10) of the first set, **characterized in that** the cam disk (32) is driven via a slide gate (38) and that the slide gate (38) has a securing means (39) which prevents displacement of the slide gate (38) in an inactivated state.

2. A manufacturing system (1) for manufacturing a stator (2) for an electric machine, in particular an electric motor, wherein the stator (2) has a main body (3) and a multiplicity of bent and/or straight bar conductors (4),
wherein the manufacturing system (1) has the following:
- a bending machine (5) for bending free ends (6) of the bar conductors (4),
- a spreading machine (7) for spreading apart the free ends (6) of the bar conductors (4) in the radial direction,
- a welding machine (8) for welding the free ends (6) of in each case at least two bar conductors (4),
- a holding device (9) according to claim 1 for the stator (2),
wherein the holding device (9) is able to be affixed on the bending machine (5), the spreading machine (7) and the welding machine (8), wherein the manufacturing system (1) furthermore has a loading and unloading station (17) for the holding device (9), and wherein an activation element (40) for the securing means (39) is configured on the loading and unloading station (17).

3. The manufacturing system (1) as claimed in claim 2, **characterized in that** the holding device (9) has a uniform interface (18) for affixing the holding device (9) on the bending machine (5), the spreading machine (7) and the welding machine (8).

4. The manufacturing system (1) as claimed in one of the preceding claims 2 or 3, furthermore having a handling apparatus (20) for moving the holding device (9) to the bending machine (5), the spreading machine (7) and the welding machine (8), in particular wherein the holding device (9) has a coupling portion (21), preferably a quick-change coupling portion, for the handling apparatus (20).

5. The manufacturing system (1) as claimed in one of the preceding claims 2 to 4, **characterized in that** the holding device (9) has a first component of a centering clamping system, in particular of a zero-point clamping system, and **in that** the bending machine (5), the spreading machine (7) and the welding machine (8) have in each case a complementary component of the centering clamping system.

6. The manufacturing system (1) as claimed in one of the preceding claims 2 to 5, **characterized in that** the holding device (9) has a centering element (26) for radially bearing of the fingers (10) of the first set.

7. The manufacturing system (1) as claimed in one of the preceding claims 2 to 6, **characterized in that** the fingers (10), between an engagement portion (30) and a drive portion (31) of the respective finger (10), have in each case an elastic element (29).

8. The manufacturing system (1) as claimed in one of the preceding claims 2 to 7, **characterized in that** the holding device (9) has a second set of fingers (35) for engaging between the bar conductors (4) at a second end side (36) of the main body (3).

9. The manufacturing system (1) as claimed in claim 8, **characterized in that** the holding device (9) has a second rotatable cam disk (37) for displacing the fingers (35) of the second set.

10. The manufacturing system (1) as claimed in claim 9, **characterized in that** the two cam disks (32, 37) are able to be driven in common by the slide gate (38).

11. The manufacturing system (1) as claimed in one of the preceding claims 2 to 10, **characterized in that** the bending machine (5), the spreading machine (7) and the welding machine (8) form a first manufacturing circuit (42) for circulating the holding device (9), **in that** the manufacturing system (1) has a further spreading machine (43), a further welding machine (44) and a further holding device (45) for a stator (2), and **in that** the bending machine (5), the further spreading machine (43) and the further welding machine (44) form a second manufacturing circuit (46) for circulating the further holding device (45).

12. The manufacturing system (1) as claimed in one of the preceding claims 2 to 11, **characterized in that** the manufacturing system (1) has a common platform (49) on which the components of the manufacturing system (1) are arranged.

13. A holding device (9) as claimed in claim 1, **characterized in that** the holding device (9) has a second set of fingers (35) for engaging between the bar conductors (4) at a second end side (36) of the main body (3), that the holding device (9) has a second rotatable cam disk (37) for moving the fingers (35) of the second set, and that the two cam disks (32, 37) are able to be driven in common by the slide gate (38).

14. A method for manufacturing a stator (2) for an electric machine, in particular an electric motor, with a manufacturing system as claimed in one of the claims 2 to 12, comprising the steps:
a) affixing (100), in particular clamping, the main body (3) and the bar conductors (4) in the holding device (9, 45), wherein the fingers (10, 35) of the holding device (9, 45) engage between the bar conductors (4),
b1) moving (102) the holding device (9, 45) to the bending machine (5), and bending (104) the free ends (6) of the bar conductors (4),
b2) moving (106) the holding device (9, 45) to a spreading machine (7, 43), and spreading apart (108) the free ends (6) in the radial direction,
c) moving (110) the holding device (9, 45) to the welding machine (8, 44), and welding (112) the free ends (6) of at least two of the bar conductors (4),
d) releasing (116) the stator (2) in the holding device (9, 45), wherein the fingers (10, 35) are disengaged from between the bar conductors (4), and retrieving (118) the stator (2) from the holding device (9, 45).

15. The method as claimed in claim 14, **characterized in that** steps a) and d) are carried out in the loading and unloading station (17, 48), and **in that** the holding device (9, 45) between steps c) and d) is moved (114) to the loading and unloading station (17, 48).

16. The method as claimed in one of claims 14 or 15, **characterized in that** initially at least one method cycle takes place using a first holding device (9, 45), and **in that** subsequently at least one method cycle takes place using a second holding device for a stator of another type.

## Revendications

1. Dispositif de maintien (9) pour un stator (2) avec un corps de base (3) et une pluralité de barres de connexion (4) courbées et/ou droites, le dispositif de maintien (9) comprenant au moins un premier ensemble de doigts (10) pour s'engager entre les barres de connexion (4) sur une première face frontale (11) du corps de base (3), le dispositif de maintien (9) comprenant un premier disque à rainures (32) rotatif pour déplacer les doigts (10) du premier ensemble, **caractérisé en ce que** le disque à rainures (32) est entraîné par un coulisseau de commande (38), et **en ce que** le coulisseau de commande (38) comprend un moyen de sécurité (39) qui, dans un état non actionné, empêche un déplacement du coulisseau de commande (38).

2. Système de fabrication (1) pour la fabrication d'un stator (2) pour une machine électrique, en particulier un moteur électrique, le stator (2) comprenant un corps de base (3) et une pluralité de barres de connexion (4) courbées et/ou droites,
le système de fabrication (1) comprenant :
- une machine de pliage (5) pour plier les extrémités libres (6) des barres de connexion (4),
- une machine d'écartement (7) pour écarter les extrémités libres (6) des barres de connexion (4) dans une direction radiale,
- une machine de soudage (8) pour souder les extrémités libres (6) d'au moins deux barres de connexion (4),
- un dispositif de maintien (9) selon la revendication 1 pour le stator (2),
le dispositif de maintien (9) pouvant être fixé à la machine de pliage (5), à la machine d'écartement (7) et à la machine de soudage (8), le système de fabrication (1) comprenant en outre une station de chargement et de déchargement (17) pour le dispositif de maintien (9), et à la station de chargement et de déchargement (17), un élément d'actionnement (40) est conçu pour le moyen de sécurité (39).

3. Système de fabrication (1) selon la revendication 2, **caractérisé en ce que** le dispositif de maintien (9) comprend une interface (18) unifiée pour fixer le dispositif de maintien (9) à la machine de pliage (5), à la machine d'écartement (7) et à la machine de soudage (8).

4. Système de fabrication (1) selon l'une des revendications précédentes 2 ou 3, comprenant en outre un dispositif de manutention (20) pour transférer le dispositif de maintien (9) vers la machine de pliage (5), la machine d'écartement (7) et la machine de soudage (8), en particulier le dispositif de maintien (9) comprenant une section de couplage (21), de préférence une section de couplage à changement rapide, pour le dispositif de manutention (20).

5. Système de fabrication (1) selon l'une des revendications précédentes 2 à 4, **caractérisé en ce que** le dispositif de maintien (9) comprend un premier composant d'un système de serrage centrant, en particulier d'un système de serrage à point zéro, et **en ce que** la machine de pliage (5), la machine d'écartement (7) et la machine de soudage (8) comprennent chacune un composant complémentaire du système de serrage centrant.

6. Système de fabrication (1) selon l'une des revendications précédentes 2 à 5, **caractérisé en ce que** le dispositif de maintien (9) comprend un élément de centrage (26) pour un appui radial des doigts (10) du premier ensemble.

7. Système de fabrication (1) selon l'une des revendications précédentes 2 à 6, **caractérisé en ce que** les doigts (10) comprennent chacun un élément élastique (29) entre une section d'engagement (30) et une section d'entraînement (31) du doigt (10) respectif.

8. Système de fabrication (1) selon l'une des revendications précédentes 2 à 7, **caractérisé en ce que** le dispositif de maintien (9) comprend un second ensemble de doigts (35) pour s'engager entre les barres de connexion (4) sur une seconde face frontale (36) du corps de base (3).

9. Système de fabrication (1) selon la revendication 8, **caractérisé en ce que** le dispositif de maintien (9) comprend un second disque à rainures (37) rotatif pour déplacer les doigts (35) du second ensemble.

10. Système de fabrication (1) selon la revendication 9, **caractérisé en ce que** les deux disques à rainures (32, 37) peuvent être entraînés ensemble par le coulisseau de commande (38).

11. Système de fabrication (1) selon l'une des revendications précédentes 2-10, **caractérisé en ce que** la machine de pliage (5), la machine d'écartement (7) et la machine de soudage (8) forment un premier circuit de fabrication (42) pour une rotation du dispositif de maintien (9), **en ce que** le système de fabrication (1) comprend une autre machine d'écartement (43), une autre machine de soudage (44) et un autre dispositif de maintien (45) pour un stator (2), et **en ce que** la machine de pliage (5), l'autre machine d'écartement (43) et l'autre machine de soudage (44) forment un second circuit de fabrication (46) pour une rotation de l'autre dispositif de maintien (45).

12. Système de fabrication (1) selon l'une des revendications précédentes 2-11, **caractérisé en ce que** le système de fabrication (1) comprend une plateforme commune (49) sur laquelle les composants du système de fabrication (1) sont disposés.

13. Dispositif de maintien (9) selon la revendication 1, **caractérisé en ce que** le dispositif de maintien (9) comprend un second ensemble de doigts (35) pour s'engager entre les barres de connexion (4) sur une seconde face frontale (36) du corps de base (3), **en ce que** le dispositif de maintien (9) comprend un second disque à rainures (37) rotatif pour déplacer les doigts (35) du second ensemble, et **en ce que** les deux disques à rainures (32, 37) peuvent être entraînés ensemble par le coulisseau de commande (38).

14. Procédé pour fabriquer un stator (2) pour une machine électrique, en particulier un moteur électrique, avec un système de fabrication selon l'une des revendications 2 à 12, comprenant les étapes suivantes :
a) fixer (100), en particulier serrer, le corps de base (3) et les barres de connexion (4) dans le dispositif de maintien (9, 45), les doigts (10, 35) du dispositif de maintien (9, 45) s'engageant entre les barres de connexion (4),
b1) transférer (102) le dispositif de maintien (9, 45) vers la machine de pliage (5) et plier (104) les extrémités libres (6) des barres de connexion (4),
b2) transférer (106) le dispositif de maintien (9, 45) vers la machine d'écartement (7, 43) et écarter (108) les extrémités libres (6) dans une direction radiale,
c) transférer (110) le dispositif de maintien (9, 45) vers la machine de soudage (8, 44) et souder (112) les extrémités libres (6) d'au moins deux des barres de connexion (4),
d) libérer (116) le stator (2) dans le dispositif de maintien (9, 45), les doigts (10, 35) étant retirés de l'engagement entre les barres de connexion (4), et retirer (118) le stator (2) du dispositif de maintien (9, 45).

15. Procédé selon la revendication 14, **caractérisé en ce que** les étapes a) et d) sont réalisées dans la station de chargement et de déchargement (17, 48), et **en ce que** le dispositif de maintien (9, 45) est transféré (114) vers la station de chargement et de déchargement (17, 48) entre les étapes c) et d).

16. Procédé selon la revendication 14 ou 15, **caractérisé en ce que** au moins un cycle de procédé est d'abord effectué avec un premier dispositif de maintien (9, 45), et qu'ensuite au moins un cycle de procédé est effectué avec un second dispositif de maintien pour un stator d'un autre type.
